# EUROPÄISCHE PATENTSCHRIFT

(11) **EP 3 233 564 B1**
(45) Veröffentlichungstag und Bekanntmachung des Hinweises auf die Patenterteilung: **13.05.2020**
(21) Anmeldenummer: 15823310.6
(22) Anmeldetag: 18.12.2015
(51) Int. Cl.: B60N 2/28, B60N 2/70

(54) **SITZ FÜR BABYS UND KLEINKINDER MIT EINER DÄMPFUNGSEINRICHTUNG**
SEAT FOR BABIES AND INFANTS WITH A DAMPING DEVICE
SIÈGE POUR BÉBÉS OU PETITS ENFANTS AVEC DISPOSITIF D'AMORTISSEMENT

(30) Priorität: 19.12.2014 DE 202014106183 U; 30.04.2015 DE 102015106803
(43) Veröffentlichungstag der Anmeldung: 25.10.2017
(73) Patentinhaber: Curt Würstl Vermögensverwaltungs-GmbH & Co. KG, 95032 Hof (DE)
(72) Erfinder: WÜRSTL, Jan-Stefan, 95194 Regnitzlosau (DE)
(74) Vertreter: Sperschneider, Alexandra
(86) Internationale Anmeldenummer: PCT/EP2015/002553
(87) Internationale Veröffentlichungsnummer: WO 2016/096141

(56) Entgegenhaltungen:
- DE-U1-202011 000 229
- JP-A- 2004 216 993
- US-A- 4 681 368
- US-A1- 2004 232 747
- US-A1- 2009 102 253
- US-A1- 2014 252 814

## Beschreibung

Die vorliegende Erfindung betrifft einen Sitz für Babys und Kleinkinder mit einer Dämpfungseinrichtung, mindestens aufweisend ein Sitzunterteil und ein Sitzrückenteil, wobei an dem Sitzunterteil ein Sitzelement und an dem Sitzrückenteil ein Rückenlehnenelement verschiebbar miteinander verbunden angebracht sind.

Derartige Sitze für Kinder und Babys finden insbesondere Verwendung bei Kraftfahrzeugen, wobei diese Sitze über ein Fahrzeuggurtsystem mit einem Fahrzeugsitz oder über eine sogenannte ISOFIX-Verbindung mit dem Fahrzeugsitz verbunden werden. Ferner können derartige Sitze auch auf Trägersystemen befestigt werden, die wiederum mit dem Fahrzeugsitz und/oder dem Fahrzeugboden verbunden sind (beispielsweise ISOFIX-System, Standfuß).

Bei solchen Kindersitzen wird in der Regel zwischen Schalensitzen für Babys und Kleinkinder sowie Kindersitzen für ältere Kinder unterschieden. Schalensitze für Babys und Kleinkinder sind als Reboard-Sitze ausgebildet, wobei die Blickrichtung eines darin aufgenommenen Kindes zur Fahrzeugrückseite gerichtet ist. Bei Kindersitzen für ältere Kinder ist die Blickrichtung eines darin aufgenommenen Kindes zur Fahrzeugvorderseite gerichtet. Für beide Arten von Kindersitzen wurden Vorschläge gemacht, wie die bei einem Unfall auftretenden auf ein Kleinkind wirkenden Kräfte reduziert und von den Kindersitzen absorbiert werden können. Ferner sind aus dem Stand der Technik Kindersitze bekannt, wobei ein Rückenlehnenelement zu einem Sitzelement verlagerbar ist, um beispielsweise ein in einem Schalensitz aufgenommenes Kind aus einer Sitzposition in eine Liegeposition zu verbringen. Ein solcher Kindersitz ist beispielsweise in DE 20 2011 000 229 U1 beschrieben.

DE 10 2011 003 650 A1 offenbart eine energieabsorbierende Deformationsstruktur zum Schutz des menschlichen Körpers, wobei ein Kindersitz ein Deformationselement aufweisen kann, das aus Schaumstoff ausgebildet ist und bei Belastung komprimiert wird und bei Belastung wieder expandiert.

Weiter offenbart DE 10 2011 013 373 A1 ein Säuglingslagerungssystem mit einer Schale, die eine Ausnehmung zur Aufnahme eines Säuglings aufweist, wobei an der Schale Lagerungspunkte vorhanden sind, an der die Schale an einer durch die Lagerungspunkte verlaufende, horizontal ausgerichtete Schwenkachse drehbar lagerbar ist. Die Schale kann bei einem Unfall in Fahrtrichtung und gegen die Fahrtrichtung verschwenkt werden.

DE 72 16 625 U offenbart einen abnehmbaren Autokindersitz, bestehend aus einem Untergestell, einer Sitzfläche, einer Rückenlehne und zwei an dem Untergestell befestigten Seitenwänden, wobei der Sitz von einer Sitzstellung in eine Liegestellung verstellbar ist und wobei eine Arretiervorrichtung vorgegesehn ist, die den Sitz in der Sitzstellung arretiert und bei Überschreiten einer bestimmten negativen Fahrzeugbeschleuni gung freigibt.

Die US 2014/0252814 A1 betrifft einen Kindersitz für Fahrzeuge, dessen äußere steife Schale einen weiteren, mehrteilig ausgebildeten Innensitz aufnimmt. Der Innensitz ist durch ein Aufhängungssystem mit dem Außensitz über Gurte verbunden. Das Aufhängungssystem wirkt hierbei gemäß als Stoßdämpfer zwischen innerem Sitz und Schale.

Dieses Dämpfungssystem erweist sich dahingehend als nachteilig, da die hierzu verwendeten Gurte manuell eingestellt und befestigt werden müssen. Bekanntermaßen kann eine Gurtfixierung nicht dauerhaft sichergestellt werden, da beispielsweise bei Fahrtbewegung oder anderen, auch geringfügigen Erschütterungen, die eingestellte Gurtstraffheit gelöst werden kann. Somit birgt der hier beschriebene Kindersitz die Gefahr, dass im Falle eines Unfalls das Aufhängungssystem nicht mehr funktioniert und es gerade nicht zu einer Kraftabsorption bzw. Dämpfungsfunktion im Falle eines Unfalls kommt.

Die US 2004/232747 A1 offenbart weiterhin einen Reboarder-Kindersitz, welcher für eine Kraftabsorption im Falle eines Unfalls eine spezielle Federlagerung offenbart.

Aus JP 2004-216993 A, US 2009/102253 A1 und US 4 681 368 A sind weitere Kindersitze offenbart, welche mit verschiedenen Dämpfungssystemen ausgestattet sind.

Die aus dem Stand der Technik bekannten Kindersitze stellen jedoch eine unbefriedigende Lösung zur Energieaufnahme bei einem Unfall dar, da der Körper des Kindes lediglich gegen ein Dämpfungsglied gedrückt oder das Kind verschwenkt wird.

Aufgabe der vorliegenden Erfindung ist es daher, einen Sitz für Babys und Kleinkinder anzugeben, der eine alternative Lösung zu dem aus dem Stand der Technik bekannten Kindersitzen darstellt und bei dem die bei einem Unfall auftretende Impulsenergie durch den Sitz absorbiert wird.

Die Aufgabe wird durch einen Sitz mit den in Anspruch 1 angegebenen technischen Merkmalen gelöst. Vorteilhafte Weiterbildungen der Erfindung sind in den Unteransprüchen im Detail angegeben.

Bei einem erfindungsgemäßen Sitz für Babys und Kleinkinder, mindestens aufweisend ein Sitzunterteil und ein Sitzrückenteil, wobei an dem Sitzunterteil ein Sitzelement und an dem Sitzrückenteil ein Rückenlehnenelement verschiebbar und miteinander verbunden angebracht sind,
- ist mindestens das Rückenlehnenelement flexibel ausgebildet und beabstandet zu dem Sitzrückenteil angeordnet,
- ist das Rückenlehnenelement derart angeordnet und ausgebildet, dass das Rückenlehnenelement bei Einwirkung einer Impulsenergie durch den Körper eines Kindes verschiebbar ist,
- sind das Rückenlehnenelement und/oder das Sitzelement mit mindestens einer Dämpfungseinrichtung verbunden, und
- die mindestens eine Dämpfungseinrichtung lässt ein Verschieben des Rückenlehnenelements ab einer bestimmbaren Impulsenergie zu, wodurch der Abstand zwischen dem Rückenlehnenelement und dem Sitzrückenteil verkleinert wird und ein Verschieben des Sitzelements gegenüber dem Sitzunterteil erfolgt.

Im Gegensatz zu den aus dem Stand der Technik bekannten Kindersitzen ist das Rückenlehnenelement flexibel ausgebildet und ermöglicht daher einen bestimmten Betrag der bei einem Unfall auftretenden Energie allein durch dessen Verformung aufzunehmen. Unter Verformung ist hierbei vorteilhaft irreversible, plastische Verformung, reversible, elastische Verformung und/oder auch teilplastische Verformung und/oder eine Kombination hieraus zu verstehen.

Zwar weisen aus dem Stand der Technik bekannte Kindersitze eine Polsterung auf, welche ebenso bei dem erfindungsgemäßen Sitz für Babys und Kleinkinder auf dem Rückenlehnenelement aufliegt, jedoch sind derartige Polster nicht in der Lage, die Energie bei einem Unfall zumindest auch teilweise bzw. in einem messbaren Rahmen aufzunehmen.

Ferner ist bei dem erfindungsgemäßen Sitz das Rückenlehnenelement derart angeordnet, dass dieses bei einem Unfall verlagert wird, wobei die Verlagerung des Rückenlehnenelementes mindestens einen Teil der bei einem Unfall auftretenden Energie aufnimmt und absorbiert. Die Bewegung und Verformung des Rückenlehnenelementes absorbiert somit zumindest teilweise die bei einem Unfall freiwerdende Energie. Zusätzlich wird das Sitzelement gegenüber dem Sitzunterteil durch die Kopplung mit dem Rückenlehnenelement verschoben. Das Verschieben des Sitzelementes bewirkt ebenfalls zumindest teilweise eine Absorption der bei einem Unfall auftretenden Energie. Das Verschieben des Sitzelements und/oder das Verschieben des Rückenlehnenelements erfolgt jedoch erst dann, wenn eine Mindestkraft/Mindestimpulsenergie auf das Kind und/oder den Sitz wirkt. Geringe Kräfte, die bspw. durch ein Abbremsen auf das Kind bzw. den Sitz wirken, führen daher nicht dazu, dass das Rückenlehnenelement und/oder das Sitzelement verschoben werden. Allerdings können Bremskräfte bereits dazu führen, dass das Rückenlehnenelement zumindest teilweise verformt wird. Ein Verschieben erfolgt vorteilhaft erst dann, wenn bspw. bei einem Unfall eine deutlich größere Kraft aufgrund der freiwerdenden Energie auf das Kind und/oder den Sitz wirkt. Die Dämpfungseinrichtung und/oder das Rückenlehnenelement nimmt die bei einem Unfall oder einem starken Abbremsen freiwerdende Energie auf. Ist die freiwerdende Energie kleiner oder gleich dem Aufnahmevermögen der Dämpfungseinrichtung und/oder des Rückenlehnenelements, erfolgt keine Verlagerung des Rückenlehnenelements und des Sitzelements, sondern vorteilhaft lediglich eine Verformung. Je nach Größe der auf das Kind einwirkenden Impulsenergie ist bereits eine Verformung des Rückenlehnenelements möglich, ohne dass ein Verschieben erfolgt oder notwendig ist. Ist die freiwerdende Energie jedoch größer als das Aufnahmevermögen der Dämpfungseinrichtung, lässt die Dämpfungseinrichtung eine Verlagerung zu. Hierbei kann die Dämpfungseinrichtung mechanische Komponenten aufweisen, die mit dem Sitzelement und/oder dem Rückenlehnenelement gekoppelt oder verbunden sind, wobei eine Verlagerung des Rückenlehnenelements und des Sitzelements nur über die mechanischen Komponenten durchführbar ist. Werden die mechanischen Komponenten nicht freigegeben, da bspw. die durch ein Abbremsen freiwerdende Energie hierfür zu gering ist, erfolgt kein Verschieben. Ist die freiwerdende Energie deutlich größer, werden die mechanischen Komponenten freigegeben und es erfolgt eine Verlagerung des Rückenlehnenelements und des Sitzelements. In weiteren Ausführungen ist jedoch mindestens das Rückenlehnenelement derart flexibel ausgebildet, dass dieses einen bestimmten Betrag der freiwerdenden Energie durch eine Verformung aufnehmen kann. Hierbei kann bspw. bei einem geringen Betrag an freiwerdender Energie, welcher Betrag nicht für eine Verschiebung des Rückenlehnenelements und des Sitzelements ausreicht, der geringe Betrag an freiwerdender Energie über das Rückenlehnenelement aufgenommen werden, welches hierzu in einem bestimmten Maß verformt wird. Bei höheren Beträgen freiwerdender Energie wird ein Teil der Energie durch die Dämpfungseinrichtung, ein Teil der Energie durch die Verschiebung des Rückenlehnenelements sowie des Sitzelements und ein Teil der Energie über das Rückenlehnenelement absorbiert.
Ferner ist bei dem hier beschriebenen Sitz auch denkbar, dass das Rückenlehnenelement derart angeordnet und ausgebildet, dass das Rückenlehnenelement bei Einwirkung einer Impulsenergie durch den Körper eines Kindes verformbar und/oder verschiebbar ist. Je nach Energieeinwirkung auf den Körper eines Kindes, welcher dadurch gegen das Rückenlehnenelement und/oder das Sitzelement gedrückt wird, erfolgt vorteilhaft eine Verformung des Rückenlehnenelements und/oder Sitzelements und die einwirkende Energie wird absorbiert. Ist die Energieaufnahmekapazität des Rückenlehnenelements und/oder Sitzelements überschritten, wird das Rückenlehnenelement und/oder Sitzelement in seiner Position verschoben.

Selbstverständlich ist dies nicht begrenzend zu verstehen, so dass es auch denkbar ist, dass die Energieaufnahmekapazität des Rückenlehnenelements und/oder Sitzelements derart groß ausgebildet ist, dass eine Verformung ohne Verschiebung ausreicht und genug Sicherheit bietet. Ferner ist auch denkbar, dass bei einem Unfall zunächst das Rückenlehnenelement und/oder Sitzelement verschoben wird, um danach die restliche einwirkende Impulsenergie durch Verformung zu absorbieren.

Ferner erfolgt bei dem erfindungsgemäßen Sitz kein reines Verschwenken oder Hineindrücken eines Kindes in ein Schaumstoffpolster, sondern es erfolgt eine Aufnahme der freiwerdenden Energie durch die Deformation des Rückenlehnenelementes und/oder dessen Verlagerung (bspw. Niederdrücken um mindestens 2 cm) und/oder das Verschieben des Sitzelementes. Es erfolgt bei dem erfindungsgemäßen Sitz damit nicht nur ein Verschwenken eines Kindes um eine bestimmte Position, wenn die freiwerdende Energie einen bestimmten Betrag übersteigt, sondern gleichfalls eine Verlagerung und/oder Verformung. Infolgedessen erfolgt eine Kombination aus Verlagerung und/oder Verschwenken und/oder Verformung.

Ferner ist der hier beschriebene Sitz von Vorteil, da durch die Verformung und/oder Verschiebung und/oder Verschwenkung des Rückenlehnenelements und/oder Sitzelements im Falle eines Aufpralls, das im Sitz angeordnete Kind von einer zunächst liegenden Position in eine aufrechtere Position, beispielsweise eine Halbsitzposition, verbracht wird. So wird die Halswirbelsäule des Kindes zusätzlich vor schädlicher Überbeanspruchung bei einem Aufprall geschützt.

Das Rückenlehnenelement ist in einer Liegeposition beabstandet zu dem Sitzrückenteil angeordnet. Hierzu weist das Rückenlehnenelement in einer weiteren Sitzposition einen geringeren Abstand zu dem Sitzrückenteil auf. Das Rückenlehnenelement ist über einen Mechanismus aus einer Sitzposition, in welcher das Rückenlehnenelement einen geringeren Abstand zu dem Sitzrückenteil aufweist, in die Liegeposition verbringbar.

Das Sitzunterteil und das Sitzrückenteil sind Bestandteile eines Schalensitzes eines Babyträgers, an dem ein Tragbügel mindestens einseitig verschwenkbar befestigt ist, und das Rückenlehnenelement ist mit dem Tragbügel des Sitzes gekoppelt, wobei über eine Verlagerung des Tragbügels aus einer ersten Position in eine zweite Position das Rückenlehnenelement von der Sitzposition in die Liegeposition verbringbar ist. Das Rückenlehnenelement kann direkt mit dem Tragbügel oder über das Sitzelement und dessen Kopplung mit dem Tragbügel aus der Sitzposition in die Liegeposition verbringbar sein. Ein Mechanismus zum Verbringen eines Rückenlehnenelementes aus einer Sitz- in eine Liegeposition und umgekehrt mittels eine Tragbügels ist beispielsweise in DE 20 2011 000 229 U1 beschrieben.

Das Sitzelement und das Rückenlehnenelement können in ihrem Verbindungsbereich so ausgebildet sein, dass beim Verbringen von einer Liegeposition in eine Sitzposition und umgekehrt die durch das Rückenlehnenelement und das Sitzelement bereitgestellte Auflagefläche für ein Kind verkleinert bzw. vergrößert wird.

Das Sitzelement kann mit mindestens einem Verlagerungselement gekoppelt und mit dem Tragbügel verbunden sein und die Verbindung des Sitzelementes mit dem Rückenlehnenelement bewirkt das Verbringen des Rückenlehnenelementes aus der Sitzposition in die Liegeposition. Das Verlagerungselement bewirkt die Bewegung zum Verbringen aus der Liegeposition in die Sitzposition und umgekehrt und kann zudem über eine Führung das Ausmaß des Verschwenkens des Sitzelementes zu dem Rückenlehnenelement begrenzen. Das Verlagerungselement kann auch mit der Dämpfungseinrichtung verbunden sein. Dabei sind das Rückenlehnenelement und das Sitzelement indirekt mit der Dämpfungseinrichtung verbunden. Beim Verbringen aus der Sitzposition in die Liegeposition wird der Winkel des Sitzelementes zu dem Rückenlehnenelement vergrößert, so dass ein darauf aufgenommenes Kind in einer liegenden Position gehalten werden kann.

Dazu kann der Winkel zwischen dem Rückenlehnenelement und dem Sitzelement veränderbar sein. Insbesondere erfolgt das Verändern des Winkels zwischen dem Rückenlehnenelement und dem Sitzelement bei einem Verbringen des Sitzes bzw. des Sitzelementes und des Rückenlehnenelementes aus einer Sitzposition in eine Liegeposition.

Ein oberes Ende des Rückenlehnenelementes kann mit dem Sitzrückenteil verbunden sein.

Ferner kann das obere Ende des Rückenlehnenelementes verschwenkbar und/oder verschiebbar mit dem Sitzrückenteil verbunden sein. Bei einer verschwenkbaren Verbindung des Rückenlehnenelementes erfolgt bei einem Unfall kein gleichmäßiges Verändern des Abstandes des Rückenlehnenelementes zu dem Sitzrückenteil, sondern ein ungleichmäßiges Verkleinern des Abstands, wobei das Rückenlehnenelement in einem unteren Bereich deutlich weiter in Richtung des Sitzrückenteils bewegt wird als die darüber verlaufenden Abschnitte. Insbesondere kann das Rückenlehnenelement im Verbindungsbereich mit dem Sitzrückenteil nicht verschwenkt werden, sondern nur auf Grund dessen flexibler Ausgestaltung eine Verformung zulassen.

Ein Verbindungsbereich zwischen dem Sitzelement und dem Rückenlehnenelement kann versteift ausgebildet sein. Dieser Verbindungsbereich absorbiert dadurch bei einem Unfall weniger Energie, bewirkt jedoch ein Verschieben des Sitzunterteils auf Grund der auftretenden Kraft bei einem Unfall und dem entsprechenden Druck, der über das Kind auf den Verbindungsbereich ausgeübt wird.

Das Sitzelement kann mit mindestens einem Übertragungselement gekoppelt sein, welches das Verschieben des Sitzelementes gegenüber dem Sitzunterteil führt.

Das Rückenlehnenelement kann mit mindestens einem Übertragungselement gekoppelt sein, welches das Niederdrücken und das Verschieben des Rückenlehnenelementes gegenüber dem Sitzrückenteil führt. Das Übertragungselement für das Sitzelement und das Übertragungselement für das Rückenlehnenelement können in weiteren Ausführungen auch kombiniert vorgesehen sein und die Bewegung des Rückenlehnenelementes und des Sitzelementes führen.

Der Tragbügel kann im Wesentlichen auf der Schwerpunktachse des Sitzes verschwenkbar gelagert und mindestens in der senkrechten Tragstellung arretierbar sein. Vorzugsweise ist der Tragbügel sowohl in der senkrechten Tragstellung als auch in einer im Wesentlichen waagerechten Stellung arretierbar. In weiteren Ausführungen eines Sitzes mit einem Rückenlehnenelement und einem Sitzelement, welche von einer Liegeposition in eine Sitzposition und umgekehrt verbringbar sind, definiert der Tragbügel in der senkrechten Tragestellung die Sitzposition und in der im Wesentlichen waagerechten Stellung die Liegeposition.

Das Rückenlehnenelement und/oder das Sitzelement können aus Kunststoff mit rückfedernder Eigenschaft bestehen. Insbesondere können das Rückenlehnenelement und/oder das Sitzelement aus einem elastisch verformbaren Kunststoff bestehen und/oder einen elastisch verformbaren Kunststoff, wie beispielsweise einen Kunststoffschaum, aufweisen. Dies ist selbstverständlich nicht begrenzend zu verstehen, so dass es auch möglich ist, dass das Rückenlehnenelement und/oder das Sitzelement aus einem zumindest teilweise plastisch verformbaren Kunststoff ausgebildet sind. In diesem Fall werden Rückenlehnenelement und/oder Sitzelement bei einem Unfall irreversibel verformt, während die einwirkende Impulskraft von Rückenlehnenelement und/oder das Sitzelement zumindest teilweise absorbiert wird.

Das Rückenlehnenelement kann Öffnungen aufweisen, durch die Gurte eines Rückhaltesystems geführt sind, wobei die Gurte mit dem Sitzrückenteil verbunden sind.

In weiteren Ausführungen weist das Rückenlehnenelement eine Struktur auf, welche Struktur eine Krafteinleitung durch den Körper eines Kindes im unteren Bereich des Rückenlehnenelementes unterstützt. Hierzu kann beispielsweise der untere Bereich des Rückenlehnenelementes flexibler ausgebildet sein als der obere Bereich des Rückenlehnenelementes.

Das Rückenlehnenelement kann aus miteinander verbundenen Kunststoffstreifen bestehen, die in Längsrichtung eine längere Erstreckung als in Querrichtung aufweisen und deren Anordnung einen federnden Boden bildet.

Ferner können die Kunststoffstreifen beabstandet zueinander angeordnet sein, so dass zwischen den Kunststoffstreifen Öffnungen vorgesehen sind.

Die mindestens eine Dämpfungseinrichtung kann im Bereich einer Verbindungsachse des Rückenlehnenelements und des Sitzelements mit dem Rückenlehnenelement und dem Sitzelement gekoppelt sein.

Die mindestens eine Dämpfungseinrichtung kann hydraulische, magnetische und/oder mechanische Bremsmittel aufweisen. Die mindestens eine Dämpfungseinrichtung kann an dem Sitz so angeordnet sein, dass sie entgegen der Bewegungsrichtung des Rückenlehnenelements und/oder des Sitzelements wirkt, so dass die Dämpfungseinrichtung eine Bewegung (Verschieben) des Rückenlehnenelements und des Sitzelements verhindert. Die Dämpfungseinrichtung lässt eine Bewegung des Rückenlehnenelements und des Sitzelements nur dann zu, wenn die freiwerdende Energie (bspw. aufgrund eines Unfalls) größer ist als der Widerstand bzw. das Aufnahmevermögen der Dämpfungseinrichtung. Hydraulische Dämpfungselemente weisen bspw. einen Kolben auf, der in einem Fluid-(z.B. Öl) gefüllten Raum verschoben wird oder ein Rotorteil, welches in einem fluidgefüllten Raum verdreht werden kann. Aufgrund der Viskosität (bspw. von Öl) wird die Bewegung des Kolbens oder des Rotorteils gehemmt. Damit kann eine Verlagerung (Verschieben) des Rückenlehnenelements und des Sitzelements bspw. auch variierend erfolgen, wobei die Verschiebung des Rückenlehnenelements und des Sitzelements zunimmt. D.h. übersteigt die freiwerdende Energie die Aufnahmefähigkeit der Dämpfungseinrichtung nur gering, erfolgt ein geringes und langsames Verschieben; übersteigt die freiwerdende Energie die Aufnahmefähigkeit der Dämpfungseinrichtung deutlich, so erfolgt ein schnelles Verschieben in einem größeren Maß. Die mindestens eine Dämpfungseinrichtung kann auch als sog. Absorptionspuffer ausgebildet sein.

Magnetische Bremsmittel können bspw. so angeordnet sein, dass in einer Normalstellung des Rückenlehnenelements und des Sitzelements ungleichnamige Pole gegenüberliegen. Um die ungleichnamigen Pole voneinander zu trennen und/oder um gleichnamige Pole aufeinander zu zu bewegen, ist eine bestimmte Mindestkraft oder ein bestimmtes Moment erforderlich. Die dafür erforderliche Kraft oder das dafür erforderliche Moment resultieren aus der freiwerdenden Energie, bspw. aufgrund eines Unfalls. Damit erfolgt ein Verschieben erst dann, wenn eine bestimmte Energie auf den Sitz bzw. das Kind wirkt. Über die Ausbildung und Auswahl der Magnete kann die erforderliche Energie für ein Verschieben festgelegt werden.

Bspw. kann der Abstand der Magnete zueinander verändert werden, um die erforderliche Energie für ein Verstellen zu verändern. Auch können die Magnete dafür ausgetauscht werden. Bei hydraulischen Bremsmitteln könnte beispielsweise der maximal mögliche Hub eines Kolbens verändert werden, um eine Anpassung der erforderlichen Mindestenergie einzustellen.

In weiteren Ausführungen umfasst die mindestens eine Dämpfungseinrichtung zwei zueinander verschiebbare oder verdrehbare Reibflächen, wobei eine Reibfläche mit dem Sitz (z.B. einer Seitenwand) und die andere Reibfläche mit dem Rückenlehnenelement und/oder dem Sitzelement verbunden oder gekoppelt sind. Um ein Verschieben des Rückenlehnenelements durchzuführen, müssen die Reibflächen zueinander verlagert werden. Dazu ist eine bestimmte Mindestenergie erforderlich. Wird der Abstand der Reibflächen oder wird über weitere Mittel der Druck der beiden Reibflächen aufeinander verändert, so kann eine Verlagerung der Reibflächen zueinander einfacher (größerer Abstand/geringerer Druck) oder schwergängiger (kleinerer Abstand/größerer Druck) durchgeführt werden. Hierfür können die Reibflächen bspw. mit einer Verstelleinrichtung gekoppelt sein. In einer einfachen Ausführung weist die Verstelleinrichtung ein Verstellrad auf, dessen Verdrehen eine Abstandsänderung der Reibflächen zueinander bewirkt. Hierzu kann auch mindestens eine der Reibflächen über eine Federeinrichtung gegen die andere Reibfläche gedrückt werden. Die Reibfläche mit der Federeinrichtung weist ein Gewinde auf, das mit einem Gewindeabschnitt auf einer Welle in Eingriff steht, wobei die Welle mit dem Verstellrad verbunden ist. Wird das Verstellrad verdreht, wird die Reibfläche relativ zu der anderen Reibfläche bewegt, wobei die Reibflächen geführt sind, so dass die Bewegung derer vorgegeben ist. Zusätzlich kann eine Federeinrichtung vorgesehen sein, die dazu dient, die Reibflächen aufeinander zu zu bewegen. Derartige Verstelleinrichtungen können jedoch auch nur ein Gewindeanordnung oder eine Federanordnung aufweisen, wobei über die Gewindeanordnung und die Federanordnung die Reibflächen aufeinander zu bewegt werden können. Dabei ist bspw. ein Austausch der Federn zum Verändern der Reibung zwischen den Reibflächen möglich. Auch können die Reibflächen ausgetauscht werden oder zusätzliche Elemente (z.B. Reibflächen) zur Veränderung des Abstands/Drucks eingesetzt werden.

In Abhängigkeit der Ausbildung und Anordnung des Rückenlehnenelements und des Sitzelements kann bei Überschreiten einer bestimmten Impulsenergie bei einem Verschieben des Rückenlehnenelements und des Sitzelements ein Verschwenken des Rückenlehnenelements und/oder des Sitzelements erfolgen, so dass der Winkel zwischen dem Rückenlehnenelement und dem Sitzelement verkleinert oder vergrößert wird.

Die mindestens eine Dämpfungseinrichtung kann mindestens eine Feder aufweisen, die einem Verschieben des Rückenlehnenelements und des Sitzelements entgegenwirkt, wobei die mindestens eine Feder mit dem Rückenlehnenelement, dem Sitzelement und/oder dem Verlagerungselement gekoppelt oder verbunden ist. Die Feder kann bspw. eine Zugfeder sein, die an einem Ende mit einem unbeweglichen Teil des Sitzes und an einem anderen Ende mit dem Rückenlehnenelement, dem Sitzelement und/oder dem Verlagerungselement gekoppelt ist. Wird die Feder ausgetauscht oder die Anzahl der Federn verändert, kann eine Anpassung der erforderlichen Mindestenergie zum Verschieben vorgenommen werden. Dies ist insbesondere dann notwendig, wenn Kinder mit einem verschiedenen Gewicht transportiert werden sollen, oder wenn ein Kind wächst und damit das Gewicht des Kindes zunimmt.

Die mindestens eine Dämpfungseinrichtung kann eine Lamellenbremse aufweisen, die mit dem Rückenlehnenelement, dem Sitzelement und/oder dem Verlagerungselement gekoppelt oder verbunden ist. Als Lamellenbremse für die Dämpfungseinrichtung wird für den Sitz bspw. ein Rotor (Welle) verwendet, der Komponenten aufweist, die in einem Ölbad gelagert sind. Es können aber auch magnetische Lamellenbremsen verwendet werden, wobei an dem Rotor Magnete angeordnet sind, die in einer Normalstellung ungleichnamigen Polen von Magneten eines Stators gegenüberliegen. Um den Rotor verdrehen zu können, müssen die Magnete so zueinander verbracht werden, dass sich die gleichnamigen Pole der Rotor- und der Statormagnete gegenüberliegen, wobei hierfür eine bestimmte erforderliche Mindestenergie aufgebracht werden muss.

Ferner ist denkbar, die Dämpfungseinrichtung zumindest teilweise auf und/oder unter und/oder in dem Rückenlehnenelement und/oder als Bestandteil des Rückenlehnenelements auszubilden. Dies ist insbesondere von Vorteil, wenn die Dämpfungseinrichtung aus reversibel und/oder zumindest teilweise irreversibel verformbarem Kunststoffschaum ausgebildet ist. Dies unterstützt die Flexibilität und Verformung des Rückenlehnenelements, so dass höhere, einwirkende Impulskräfte absorbiert werden können und die Sicherheit erhöht wird.

Der Sitz kann entgegen der Fahrtrichtung eines Fahrzeugs auf einem Fahrzeugsitz derart anordenbar sein, dass die Blickrichtung eines darin aufgenommenen Kindes zur Fahrzeugrückseite gerichtet ist. Der Sitz kann in diesen Ausführungen als Schalensitz und insbesondere als sogenannter Reboard-Sitz ausgebildet sein.

Alternativ dazu kann der Sitz in Fahrtrichtung eines Fahrzeugs auf einem Fahrzeug derart anordenbar sein, dass die Blickrichtung eines darin aufgenommenen Kindes zur Fahrzeugvorderseite gerichtet ist. Ein solcher Sitz kann sowohl als Schalensitz für Babys und Kleinkinder als auch als herkömmlicher Kindersitz für ältere Kinder ausgebildet sein.

Die vorliegende Erfindung ist weder auf Schalensitze für Babys und Kleinkinder noch auf Kindersitze für ältere Kinder beschränkt.

Die flexible Ausgestaltung des Rückenlehnenelements kombiniert mit dem Verschieben des Sitzelementes bewirkt in einer Vielzahl von Anwendungen und Ausgestaltungsmöglichkeiten von Kindersitzen eine deutlich verbesserte Energieabsorption bei einem Unfall.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Darstellung eines Sitzes in perspektivischer Ansicht;
- Fig. 2: eine schematische Darstellung eines Sitzes mit Verlagerungselementen in perspektivischer Ansicht;
- Fig. 3: einen Schnitt durch den Sitz von Fig. 1;
- Fig. 4: einen Schnitt durch den Sitz von Fig. 2;
- Fig. 5: eine schematische Darstellung eines Sitzes mit einem als Zugfeder ausgebildeten Dämpfungselement einer Dämpfungseinrichtung; und
- Fig. 6: eine weitere schematische Darstellung eines Sitzes mit einem als Zugfeder ausgebildeten Dämpfungselement einer Dämpfungseinrichtung.

In den Figuren mit gleichen Bezugszeichen versehene Teile und Komponenten entsprechen im Wesentlichen einander, solange nichts anders angegeben ist. Ferner wird darauf verzichtet, Bestandteile zu beschreiben, welche nicht wesentlich für das Verständnis der hierin offenbarten technischen Lehre sind.

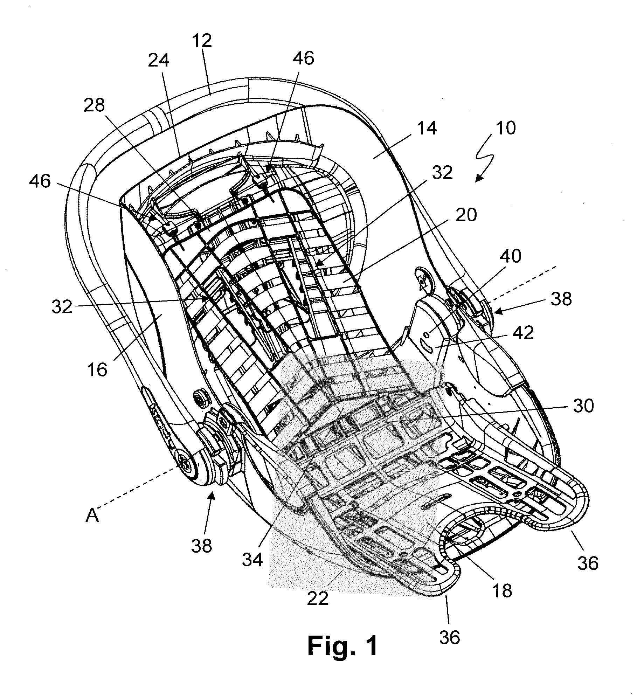

Fig. 1 bis 6 zeigen eine Ausführung für Schalensitze, wobei die hierin beschriebene technische Lehre nicht darauf beschränkt ist, sondern auch für Kindersitze verwendet werden kann, die nicht als Schalensitze für Babys und Kleinkinder ausgebildet sind.

Fig. 1 zeigt einen Kindersitz 10 ohne Polster und ein Gurtsystem, welches zur Fixierung eines Babys oder Kleinkindes in dem Sitz 10 dient. Ferner zeigt die Darstellung von Fig. 1 keine Verbindung des Sitzes 10 mit einem Fahrzeugsitz. Für den Sitz 10 kann eine Verbindung mit einem Fahrzeugsitz eines Fahrzeugs über ein Fahrzeuggurtsystem oder eine ISOFIX-Anbindung erfolgen.

Der Sitz 10 weist zwei gegenüberliegende Seitenwände 14 und 16, ein zwischen den Seitenwänden 14 und 16 angeordnetes und mit den Seitenwänden 14 und 16 verbundenes Sitzunterteil 22 und ein zwischen den Seitenwänden 14 und 16 angeordnetes und mit den Seitenwänden 14 und 16 verbundenes Sitzrückenteil 24 auf. Die Seitenwände 14 und 16, das Sitzunterteil 22 und das Sitzrückenteil 24 bilden eine Schale des Sitzes 10. An dem Sitzrückenteil 24 ist ein Rückenlehnenelement 20 angeordnet. Das Rückenlehnenelement 20 ist an dessen oberem Ende 28 über zwei Aufhängungen 46 mit dem Sitzrückenteil 24 verbunden. An dem unteren Bereich 34 des Rückenlehnenelementes 20 ist das Rückenlehnenelement 20 mit dem Sitzelement 18 verbunden. Das Sitzelement 18 liegt auf dem Sitzunterteil 22 auf. Das Sitzelement 18 weist zwei abstehende Beinauflagebereiche 36 auf. Die Auflagebereiche 36 dienen dazu, die Beine eines Kindes abzustützen. Ein Verbindungsbereich 30 zwischen dem Sitzelement 18 und dem Rückenlehnenelement 20 ist so ausgebildet, dass bei einem Verbringen des Rückenlehnenelementes 20 und des Sitzelementes 18 die durch das Rückenlehnenelement 20 und das Sitzelement 18 bereitgestellte Auflagefläche für ein Kind vergrößert bzw. verkleinert wird. Fig. 1 zeigt die Liegeposition, wobei der Auflagebereich über das Rückenlehnenelement 20 und das Sitzelement 18 vergrößert ist. Der Verbindungsbereich 30 ist ferner versteift ausgebildet, so dass dieser im Wesentlichen nicht verformt werden kann. Dementgegen ist das Rückenlehnenelement 20 aus einem flexiblen Material gefertigt bzw. flexibel ausgebildet, so dass das Rückenlehnenelement 20 in Richtung des Sitzrückenteils 24 bewegt werden kann und zudem verformbar ist. Hierzu ist das Rückenlehnenelement 20 beabstandet zu dem Sitzrückenteil 24 angeordnet. Der Abstand zwischen dem Sitzrückenteil 24 und dem Rückenlehnenelement 20 beträgt in dem unteren Bereich 34 des Rückenlehnenelementes 20 mindestens 2 cm.

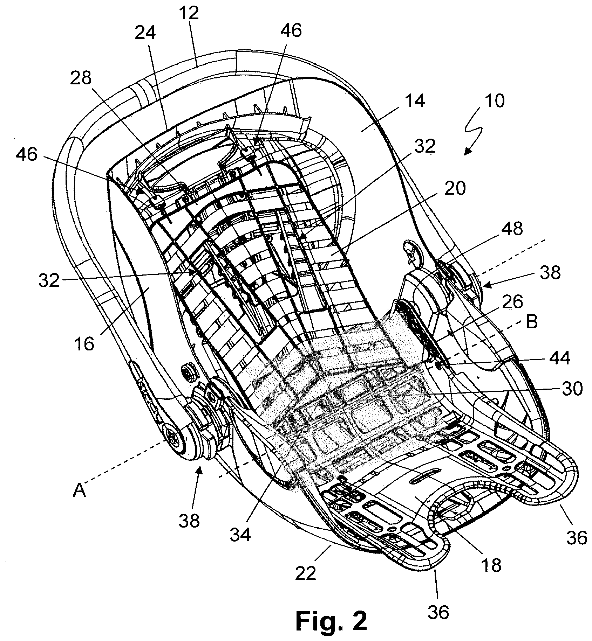

Der Sitz 10 weist ferner einen Tragbügel 12 auf. Der Tragbügel 12 ist im Wesentlichen auf der Schwerpunktachse A des Sitzes 10 gelagert und um die Schwerpunktachse A verschwenkbar. Der Tragbügel 12 befindet sich in Fig. 1 in der hinteren Position (im Wesentlichen waagrechten Stellung) und ist in dieser Position über Arretierungsvorrichtungen 38 arretiert. Der Tragbügel 12 kann nach vorne verschwenkt werden, so dass sich dieser in einer im Wesentlichen senkrechten Tragestellung befindet. Der Tragbügel 12 kann in dieser senkrechten Tragestellung ebenfalls über die Arretierungsvorrichtungen 38 arretiert werden. Der Tragbügel 12 ist mit Verlagerungselementen 26 gekoppelt, welche in Fig. 1 nicht dargestellt sind (siehe Fig. 2).

Die Verlagerungselemente 26 sind über eine Welle in Öffnungen 40 drehbar gelagert und weisen Führungsmittel auf, die in Führungskulissen 42 geführt werden. Ferner sind die Verlagerungselemente 26 mit dem Sitzelement 18 verbunden. Die Verlagerungselemente 26 können um die Schwerpunktachse A verschwenkt werden, wobei die Verlagerungselemente 26 mit einer Lamellenbremse 48 verbunden sind. Das Ausmaß des Verschwenkens der Verlagerungselemente 26 ist über die Führungsansätze in den Führungskulissen 42 begrenzt. Die Verlagerungselemente 26 dienen dazu, das Sitzelement 18 und das Rückenlehnenelement 20 aus der in Fig. 1 gezeigten Liegeposition in eine Sitzposition zu verbringen, wobei hierzu das Sitzelement 18 in den Sitz 10 hineingeschoben wird und dadurch das Rückenlehnenelement 20 um eine gedachte Linie im oberen Ende 28 des Rückenlehnenelementes 20 verschwenkt wird, wobei der Abstand des Rückenlehnenelementes 20 zu dem Sitzrückenteil 24 im unteren Bereich 34 verkleinert wird. Die Lamellenbremsen 48 sind in der in Fig. 1 und 2 dargestellten Abdeckung zwischen der Arretierungsvorrichtung 38 und dem Verlagerungselement 26 angeordnet. Lediglich die mit der Lamellenbremse 48 verbundene Welle (Rotor), die mit dem Verlagerungselement 26 verbunden ist, ist hier dargestellt. Ein Teil (Stator) der Lamellenbremse 48 ist fest mit dem Sitz 10 verbunden, wobei der Rotor (Welle) nur verdreht werden kann, wenn ein bestimmtes erforderliches Mindestdrehmoment auf die Welle wirkt, was bei einem Unfall über die durch das Kind auf die Übertragungselemente 26 wirkende Kraft erfolgt. Diese Kraft erzeugt ein Moment an den Übertragungselementen 26, welche dann bestrebt sind, sich um die Schwerpunktachse A zu verdrehen. Die Lamellenbremse 48 weist bspw. Statormagnete auf, die Rotormagneten der Welle gegenüberliegen. In einer Neutralstellung liegen sich die ungleichnamigen Pole der Magnete des Stators und des Rotors gegenüber. Damit die Welle verdreht werden kann, muss jedoch ein Mindestmoment auf die Welle wirken, um die Welle zu verdrehen, wobei sich die gleichnamigen Magnete des Rotors und des Stators gegenüberliegen.

Die Lamellenbremsen 48 dienen dazu, die Verlagerung/ein Verschwenken der Verlagerungselemente 26 und damit ein Verschwenken des Sitzelements 18 und des Rückenlehnenelements 20 erst dann zuzulassen, wenn eine erforderliche Mindestenergie auf den Sitz 10 bzw. ein darin aufgenommenes Kind wirkt. Die Lamellenbremsen 48 bremsen die Bewegung der Verlagerungselemente 26 und nehmen die bei einem Unfall auftretende Energie zumindest teilweise auf. Ist die bei einem Unfall freiwerdende Energie gering, so reicht diese Energie nicht dazu aus, das in dem Sitz 10 aufgenommene Kind über das Sitzelement 18 und das Rückenlehnenelement 20 in Richtung des Sitzrückenteils 24 zu bewegen. Übersteigt die bei einem Unfall freiwerdende Energie das Aufnahmevermögen der Lamellenbremsen 48 bzw. können die Lamellenbremsen 48 die freiwerdende Energie nur zu einem Teil absorbieren, erfolgt ein Verschwenken der Verlagerungselemente 26, was schließlich zu einem Verschieben des Sitzelements 18 und des Rückenlehnenelements 20 führt. Die Verlagerung des Sitzelements 18 und des Rückenlehnenelements 20 absorbiert dabei einen Teil der bei einem Unfall freiwerdenden Energie. Zusätzlich absorbiert das flexible Rückenlehnenelement 20 einen Teil der bei einem Unfall freiwerdenden bzw. auf das Kind wirkenden Energie, wodurch sich keine hohen Belastungen für das in dem Sitz 10 aufgenommene Kind ergeben.

Das Rückenlehnenelement 20 besteht aus miteinander verbundenen Kunststoffstreifen. Die Kunststoffstreifen bestehen aus einem Kunststoff mit rückfedernder Eigenschaft. Ferner bestehen die Verbindungsstege, welche die Kunststoffstreifen miteinander verbinden aus einem Kunststoff mit rückfedernder Eigenschaft. Die Kunststoffstreifen sind beabstandet zueinander angeordnet, so dass die dadurch gebildete Struktur aufgrund der verwendeten Materialien und deren Anordnung einen federnden Boden bildet. Das Sitzelement 18 besteht aus einem Kunststoff ohne rückfedernde Eigenschaft und ist im Wesentlichen nicht flexibel ausgebildet. Ferner sind die Seitenwände 14 und 16, das sitzunterteil 22, das Sitzrückenteil 24 und der Tragbügel 12 aus einem nicht elastischen Kunststoff gefertigt.

Fig. 2 zeigt eine schematische Darstellung eines Sitzes 10 mit Verlagerungselementen 26, die mit den Lamellenbremsen 48 verbunden sind, in perspektivischer Ansicht. Der in Fig. 2 dargestellte Sitz 10 entspricht im Wesentlichen dem in Fig. 1 dargestellten Sitz 10, wobei die Darstellung von Fig. 2 zusätzlich ein Verlagerungselement 26 und eine Welle zeigt, die mit einer Lamellenbremse 48 gekoppelt ist. Die Welle ist dabei ein Teil der Lamellenbremse 48. Das Verlagerungselement 26 ist an der Seitenwand 14 angeordnet und mit dem Tragbügel 12 gekoppelt. In weiteren Ausführungen kann das Verlagerungselement 26 über die Lamellenbremse 48 mit dem Tragbügel 12 gekoppelt sein. Die gegenüberliegende Seitenwand 16 weist ebenso ein Verlagerungselement 26 auf, welches mit dem Tragbügel 12 gekoppelt und mit dem Sitzelement 18 verbunden ist. Dieses Verlagerungselement 26 kann ebenfalls über eine Lamellenbremse 48 mit dem Tragbügel 12 gekoppelt sein. Die Verlagerungselemente 26 weisen Vorsprünge auf, die in Öffnungen 44 des Sitzelementes 18 verdrehbar aufgenommen sind (Schwenkachse B). Erfolgt ein Verbringen des Tragbügels 12 aus der in Fig. 2 gezeigten Stellung in eine vertikale Stellung, so kann ein Verschwenken der Verlagerungselemente 26 um die Schwerpunktachse A in Richtung des Sitzrückenteils 24 erfolgen, wobei das Sitzelement 18 in den Sitz 10 hineingeschoben wird. Hierzu sind die Lamellenbremsen 48 derart angeordnet und ausgebildet, dass ein Verschwenken des Tragbügels 12 durchgeführt werden kann und zudem ein Abbremsen eines Verschwenkens der Verlagerungselemente 26 möglich ist. Zugleich wird bei einem Verschwenken der Verlagerungselemente 26 der Abstand des Rückenlehnenelementes 20 zu dem Sitzrückenteil 24 im unteren Bereich 34 verkleinert.

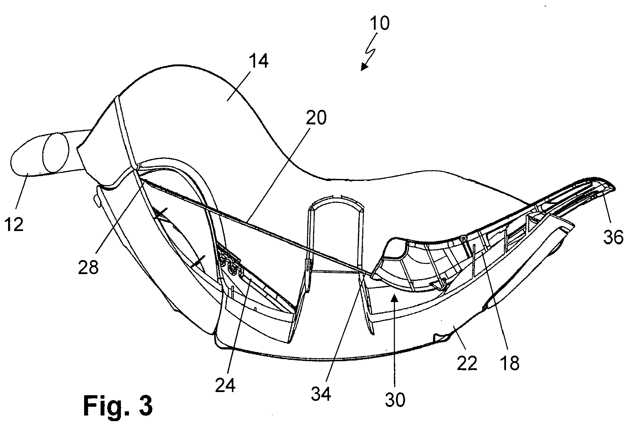

Fig. 3 zeigt einen Schnitt durch den Sitz 10 von Fig. 1. Fig. 3 zeigt die Darstellung ohne Verlagerungselement 26 und ohne Lamellenbremse 48. Fig. 3 zeigt ebenso wie Fig. 1 die Liegestellung, wobei der Tragbügel 12 in einer verschwenkten, im Wesentlichen waagerechten Position angeordnet ist. Ferner befindet sich das Rückenlehnenelement 20 beabstandet zu dem Sitzrückenteil 24. Insbesondere ist der Abstand des Rückenlehnenelementes 20 im Verbindungsbereich 30 sowie zwischen dem Verbindungsbereich 30 im unteren Bereich 34 des Rückenlehnenelementes 20 und dem oberen Ende 28 des Rückenlehnenelementes 20 größer als im oberen Ende 28 des Rückenlehnenelementes 20, in welchem das Rückenlehnenelement 20 mit dem Sitz 10 verbunden ist.

Nachfolgend wird die Funktion des Sitzes 10 bei einem Unfall beschrieben, wobei der Sitz 10 derart in einem Fahrzeug angeordnet ist, dass die Blickrichtung des darin aufgenommenen Kindes zur Fahrzeugrückseite gerichtet ist.

Der Rücken des Kindes liegt im Wesentlichen auf dem Rückenlehnenelement 20 auf. Das Gesäß und die Beine des Kindes liegen auf dem Sitzelement 18 auf, wobei das Gesäß insbesondere in dem verstärkten Verbindungsbereich 30 aufgenommen ist. Bei einem Unfall wird das Kind in erster Linie gegen das Rückenlehnenelement 20 gedrückt. Das Rückenlehnenelement 20 ist dann bestrebt, nach hinten in Richtung des Sitzrückenteils 24 bewegt zu werden. Über die Kopplung des Rückenlehnenelements 20 mit dem Sitzelement 18 ist das Sitzelement 18 bestrebt, verschoben zu werden. Dabei sind die Verlagerungselemente 26 bestrebt, um die Schwerpunktachse A im Uhrzeigersinn verdreht zu werden. Ein Verdrehen der Verlagerungselemente 26 und damit eine Verlagerung des Rückenlehnenelements 20 und des Sitzelements 18 erfolgt jedoch nur, wenn das über die bei einem Unfall freiwerdende Energie aufgebrachte Drehmoment auf der Welle, die mit dem Verlagerungselement 26 verbunden ist, so groß ist, dass die Bremswirkung der Lamellenbremse 48 nicht ausreicht, um die freiwerdende Energie vollständig zu absorbieren. Übersteigt die freiwerdende Energie die Aufnahmefähigkeit der Lamellenbremse 48, wird das Rückenlehnenelement 20 dann um das obere Ende 28 verschwenkt und verformt sich teilweise. Ferner wird durch die Verlagerung des Rückenlehnenelementes 20 das Sitzelement 18 entlang des Sitzunterteils 22 in Richtung des Sitzrückenteils 24 in den Sitz 10 hineingeschoben. Die auftretende Unfallenergie wird durch die Lamellenbremse 48, die Verformung des Rückenlehnenelementes 20 und die Verlagerung des Rückenlehnenelementes 20 sowie des Sitzelementes 18 absorbiert. Nachdem die durch den Unfall freiwerdende Energie absorbiert wurde, kann sich das Rückenlehnenelement 20 auf Grund seiner flexiblen Ausgestaltung zurück in die Ausgangsstellung, welche in Fig. 3 gezeigt ist, bewegen. Ferner wird das Sitzelement 18 ebenfalls wieder nach vorne verschoben, wobei die Lamellenbremse 48 eine derartige Rückführung sogar unterstützen kann.

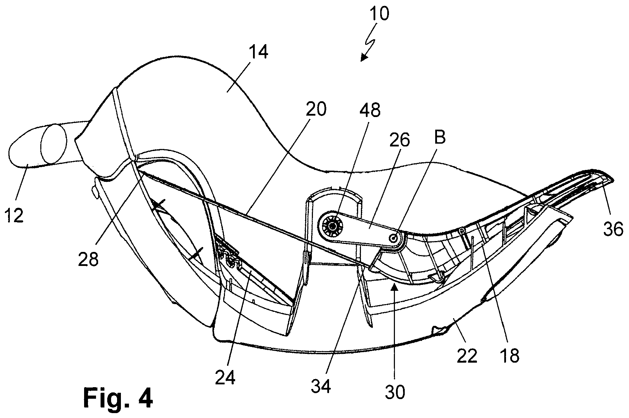

Fig. 4 zeigt einen Schnitt durch den Sitz 10 von Fig. 2. In Fig. 4 ist das Verlagerungselement 26 dargestellt, das mit dem Tragbügel 12 und der Lamellenbremse 48 gekoppelt und mit dem Sitzelement 18 verbunden ist. Die in Fig. 4 gezeigte Darstellung zeigt ebenso wie die in Fig. 3 gezeigte Darstellung die Liegeposition des Sitzes 10. In einer Sitzposition wird der Tragbügel 12 im Uhrzeigersinn nach oben in eine im Wesentlichen vertikale Stellung verbracht. Hierbei wird das mit dem Tragbügel 12 verbundene Verlagerungselement 26 nach unten verschwenkt. Das Verschwenken des Verlagerungselementes 26 bewirkt eine Verlagerung des Sitzelementes 18. Das Sitzelement 18 wird in den Sitz 10 in Richtung des Sitzrückenteils 24 entlang dem Sitzunterteil 22 verschoben. Durch das Verschieben des Sitzunterteils 18 wird ebenfalls das Rückenlehnenelement 20 verlagert. Das Rückenlehnenelement 20 wird zudem um eine gedachte Achse im oberen Ende 28 verschwenkt, wobei der Abstand zwischen dem Sitzrückenteil 24 und dem Rückenlehnenelement 20 verkleinert wird. Ferner sind das Rückenlehnenelement 20 und das Sitzelement 18 so miteinander verbunden, dass ein Teil des Rückenlehnenelementes 20 entlang dem Sitzelement 18 verschoben wird. Hierbei wird die Auflagefläche des Sitzes 10, gebildet durch das Rückenlehnenelement 20 und das Sitzelement 18, verkleinert.

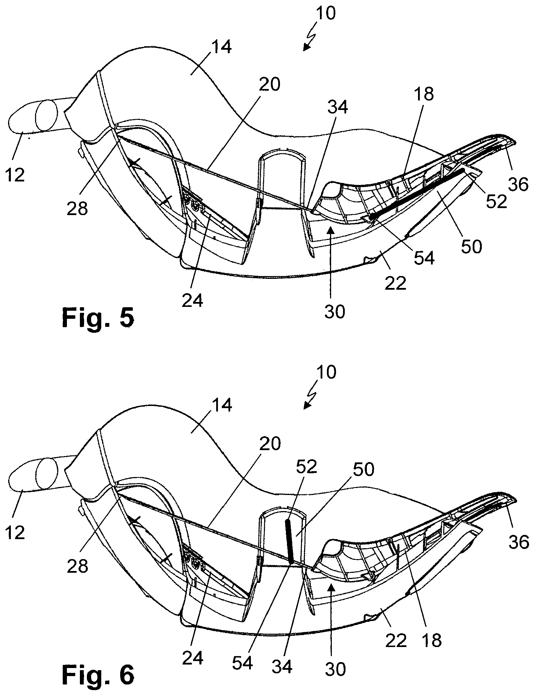

Fig. 5 zeigt eine alternative Ausbildung einer Dämpfungseinrichtung für einen Sitz 10. Die Dämpfungseinrichtung weist Zugfedern 50 auf, wobei in Fig. 5 nur eine Zugfeder 50 dargestellt ist. Die Zugfeder 50 ist an einem ersten Ende 52 mit einem Sitzunterteil 22 und an einem zweiten Ende 54 mit dem Sitzelement 18 verbunden. Damit das Sitzelement 18 verlagert werden kann, muss die dafür auf das Sitzelement 18 wirkende Energie so groß sein, dass die Zugfeder 50 expandiert wird. In Abhängigkeit der verwendeten Zugfeder 50 kann eine Verlagerung des Sitzelements 18 und des Rückenlehnenelements 20 bei verschiedenen Energien erfolgen. Der Sitz 10 kann daher auch noch für ein Kind verwendet werden, wenn das Kind älter und damit schwerer wird, wobei die Unfallstärke, bei welcher eine Verlagerung erfolgt, im Wesentlichen gleich bleibt.

Fig. 6 zeigt eine weitere alternative Ausbildung einer Dämpfungseinrichtung für einen Sitz 10. Die Dämpfungseinrichtung weist Zugfedern 50 auf, wobei in Fig. 6 nur eine Zugfeder 50 dargestellt ist. Die Zugfeder 50 ist an einem ersten Ende 52 mit einem Wandteil des Sitzes 10 in dem Bereich angeordnet, über welchen ein nicht dargestellter Tragbügel mit dem Sitz 10 gekoppelt ist. Die Zugfeder 50 ist an einem zweiten Ende 54 mit dem Rückenlehnenelement 20 verbunden. Damit das Rückenlehnenelement 20 verlagert werden kann, muss die dafür auf das Rückenlehnenelement 20 wirkende Energie so groß sein, dass die Zugfeder 50 expandiert wird. In Abhängigkeit der verwendeten Zugfeder 50 kann eine Verlagerung des Sitzelements 18 und des Rückenlehnenelements 20 bei verschiedenen Energien erfolgen. Der Sitz 10 kann daher auch noch für ein Kind verwendet werden, wenn das Kind älter und damit schwerer wird, wobei die Unfallstärke, bei welcher eine Verlagerung erfolgt, im Wesentlichen gleich bleibt.

In weiteren nicht dargestellten Ausführungen können sowohl Zugfedern 50, wie in Fig. 5 dargestellt, als auch Zugfedern 50, wie in Fig. 6 dargestellt, verwendet werden. Auch eine Kombination einer Lamellenbremse 48 mit mindestens einer Zugfeder 50 (Fig. 5 und/oder Fig. 6) ist in weiteren Ausführungen vorgesehen.

### Bezugszeichenliste

- 10: Sitz
- 12: Tragbügel
- 14: Seitenwand
- 16: Seitenwand
- 18: Sitzelement
- 20: Rückenlehnenelement
- 22: Sitzunterteil
- 24: Sitzrückenteil
- 26: Verlagerungselement
- 28: oberes Ende
- 30: Verbindungsbereich
- 32: Öffnung
- 34: unterer Bereich
- 36: Beinauflagebereich
- 38: Arretierungsvorrichtung
- 40: Öffnung
- 42: Führungskulisse
- 44: Öffnung
- 46: Aufhängung
- 48: Lamellenbremse
- 50: Zugfeder
- 52: Ende
- 54: Ende

- A: Schwerpunktachse
- B: Schwenkachse

## Patentansprüche

1. Sitz für Babys und Kleinkinder, mindestens aufweisend ein Sitzunterteil (22) und ein Sitzrückenteil (24), wobei an dem Sitzunterteil (22) ein Sitzelement (18) und an dem Sitzrückenteil (24) ein Rückenlehnenelement (20) verschiebbar und miteinander verbunden angebracht sind, wobei
- mindestens das Rückenlehnenelement (20) flexibel ausgebildet und beabstandet zu dem Sitzrückenteil (24) angeordnet ist,
- das Rückenlehnenelement (20) derart angeordnet und ausgebildet ist, dass das Rückenlehnenelement (20) bei Einwirkung einer Impulsenergie durch den Körper eines Kindes verschiebbar ist,
- das Rückenlehnenelement (20) und/oder das Sitzelement (18) mit mindestens einer Dämpfungseinrichtung verbunden sind, und
- die mindestens eine Dämpfungseinrichtung ein Verschieben des Rückenlehnenelements (20) ab einer bestimmbaren Impulsenergie zulässt, wodurch der Abstand zwischen dem Rückenlehnenelement (20) und dem Sitzrückenteil (24) verkleinert wird und ein Verschieben des Sitzelements (18) gegenüber dem Sitzunterteil (22) erfolgt, wobei das Rückenlehnenelement (20) in einer Liegeposition beabstandet zu dem Sitzrückenteil (24) angeordnet ist und das Rückenlehnenelement (20) über einen Mechanismus aus einer Sitzposition, in welcher das Rückenlehnenelement (20) einen geringeren Abstand zu dem Sitzrückenteil (24) aufweist, in die Liegeposition verbringbar ist, **dadurch gekennzeichnet, dass** das Sitzunterteil (22) und das Sitzrückenteil (24) Bestandteile eines Schalensitzes eines Babyträgers sind, an dem ein Tragbügel (12) mindestens einseitig verschwenkbar befestigt ist, und das Rückenlehnenelement (20) mit dem Tragbügel (12) des Sitzes gekoppelt ist, wobei über eine Verlagerung des Tragbügels (12) aus einer ersten Position in eine zweite Position das Rückenlehnenelement (20) aus der Sitzposition in die Liegeposition verbringbar ist.

2. Sitz nach Anspruch 1, wobei das Sitzelement (18) mit mindestens einem Verlagerungselement (26) gekoppelt und mit dem Tragbügel (12) verbunden ist und die Verbindung des Sitzelements (18) mit dem Rückenlehnenelement (20) das Verbringen des Rückenlehnenelements (20) aus der Sitzposition in die Liegeposition bewirkt.

3. Sitz nach Anspruch 1 oder 2, wobei der Tragbügel (12) im Wesentlichen auf der Schwerpunktachse (A) des Sitzes verschwenkbar gelagert und mindestens in der senkrechten Tragestellung arretierbar ist.

4. Sitz nach einem der Ansprüche 1 bis 3, wobei die mindestens eine Dämpfungseinrichtung im Bereich einer Verbindungsachse des Rückenlehnenelements (20) und des Sitzelements (18) mit dem Rückenlehnenelement (20) und dem Sitzelement (18) gekoppelt ist.

5. Sitz nach einem der Ansprüche 1 bis 4, wobei die mindestens eine Dämpfungseinrichtung hydraulische, magnetische und/oder mechanische Bremsmittel aufweist.

6. Sitz nach einem der Ansprüche 1 bis 5, wobei die mindestens eine Dämpfungseinrichtung mindestens eine Feder aufweist, die einem Verschieben des Rückenlehnenelements (20) und des Sitzelements (18) entgegenwirkt, wobei die mindestens eine Feder mit dem Rückenlehnenelement (20), dem Sitzelement (18) und/oder dem Verlagerungselement (26) gekoppelt oder verbunden ist.

7. Sitz nach einem der Ansprüche 1 bis 5, wobei die mindestens eine Dämpfungseinrichtung eine Lamellenbremse aufweist, die mit dem Rückenlehnenelement (20), dem Sitzelement (18) und/oder dem Verlagerungselement (26) gekoppelt oder verbunden ist.

## Claims

1. Seat for babies and infants, at least comprising a seat bottom part (22) and a seat back part (24), wherein a seat element (18) is attached to the seat bottom part (22) and a backrest element (20) is attached to the seat back part (24) in a shifting and interconnected manner, wherein
- at least the backrest element (20) is designed to be flexible and is arranged at a distance from the seat back part (24),
- the backrest element (20) is arranged and designed in such a way that the backrest element (20) is slidable under the effect of an impulse energy by the body of a child,
- the backrest element (20) and/or the seat element (18) are connected to at least one damping device, and
- the at least one damping device allows a shift of the backrest element (20) from a determinable impulse energy, as a result of which the distance between the backrest element (20) and the seat back part (24) is reduced and a shift of the seat element (18) relative to the seat bottom part (22) takes place, wherein in a lying position the backrest element (20) is arranged spaced from the seat back part (24) and the backrest element (20) is movable by means of a mechanism from a sitting position, in which the backrest element (20) has a smaller distance to the seat back part (24), into the lying position,
**characterized in that** the seat bottom part (22) and the seat back part (24) are components of a bucket seat of a baby carrier to which a carrying handle (12) is attached so as to be pivotable at least on one side, and the backrest element (20) is coupled with the carrying handle (12) of the seat, wherein by shifting the carrying handle (12) from a first position to a second position the backrest element (20) can be moved from the sitting position into the lying position.

2. Seat according to claim 1, wherein the seat element (18) is coupled with at least one displacement element (26) and is connected to the carrying handle (12) and the connection of the seat element (18) to the backrest element (20) causes the backrest element (20) to be moved from the sitting position to the lying position.

3. Seat according to claim 1 or 2, wherein the carrying handle (12) is pivotably mounted substantially on the center of gravity axis (A) of the seat and is lockable at least in the vertical carrying position.

4. Seat according to one of the claims 1 to 3, wherein the at least one damping device is coupled to the backrest element (20) and the seat element (18) in the area of a connecting axis of the backrest element (20) and the seat element (18).

5. Seat according to one of the claims 1 to 4, wherein the at least one damping device comprises hydraulic, magnetic and/or mechanical braking means.

6. Seat according to one of the claims 1 to 5, wherein the at least one damping device comprises at least one spring which counteracts a shift of the backrest element (20) and the seat element (18), wherein the at least one spring is coupled or connected to the backrest element (20), the seat element (18), and/or the displacement element (26).

7. Seat according to one of the claims 1 to 5, wherein the at least one damping device comprises a multi-disk brake which is coupled or connected to the backrest element (20), the seat element (18), and/or the displacement element (26).

## Revendications

1. Siège pour bébés et jeunes enfants, présentant au moins une partie inférieure de siège (22) et une partie arrière de siège (24), dans lequel un élément d'assise (18) est monté sur la partie inférieure de siège (22) et un élément de dossier (20), sur la partie arrière de siège (24), de manière coulissante et reliée l'un à l'autre, dans lequel
- au moins l'élément de dossier (20) est réalisé de manière flexible et disposé à distance de la partie arrière de siège (24),
- l'élément de dossier (20) est disposé et réalisé de telle sorte que l'élément de dossier (20) peut coulisser sous l'action d'une énergie d'impulsion à travers le corps d'un enfant,
- l'élément de dossier (20) et/ou l'élément d'assise (18) sont reliés à au moins un dispositif d'amortissement, et
- le au moins un dispositif d'amortissement admet un coulissement de l'élément de dossier (20) à partir d'une énergie d'impulsion pouvant être prédéfinie, moyennant quoi l'écart entre l'élément de dossier (20) et la partie arrière de siège (24) est réduit et qu'un coulissement de l'élément d'assise (18) par rapport à la partie inférieure de siège (22) s'effectue, dans lequel
l'élément de dossier (20), dans une position couchée, est disposé à distance de la partie arrière de siège (24) et l'élément de dossier (20) peut être amené, par l'intermédiaire d'un mécanisme, d'une position assise, dans laquelle l'élément de dossier (20) présente un écart réduit par rapport à la partie arrière de siège (24), à la position couchée, **caractérisé en ce que**
la partie inférieure de siège (22) et la partie arrière de siège (24) font partie d'un siège coque d'un porte-bébé, sur lequel un arceau de transport (12) est fixé de manière à pouvoir pivoter au moins d'un côté, et l'élément de dossier (20) est accouplé à l'arceau de transport (12) du siège, dans lequel l'élément de dossier (20) peut être amené de la position assise à la position couchée par l'intermédiaire d'un déplacement de l'arceau de transport (12) d'une première position dans une deuxième position.

2. Siège selon la revendication 1,
dans lequel l'élément d'assise (18) est accouplé à au moins un élément de déplacement (26) et relié à l'arceau de transport (12) et la liaison de l'élément d'assise (18) à l'élément de dossier (20) provoque le déplacement de l'élément de dossier (20) de la position assise à la position couchée.

3. Siège selon la revendication 1 ou 2,
dans lequel l'arceau de transport (12) est monté pivotant sensiblement sur l'axe du centre de gravité (A) du siège et peut être bloqué au moins dans la position de transport verticale.

4. Siège selon l'une quelconque des revendications 1 à 3,
dans lequel le au moins un dispositif d'amortissement est accouplé dans la zone d'un axe de liaison de l'élément de dossier (20) et de l'élément d'assise (18), à l'élément de dossier (20) et à l'élément d'assise (18).

5. Siège selon l'une quelconque des revendications 1 à 4,
dans lequel le au moins un dispositif d'amortissement présente des moyens de freinage hydrauliques, magnétiques et/ou mécaniques.

6. Siège selon l'une quelconque des revendications 1 à 5,
dans lequel le au moins un dispositif d'amortissement présente au moins un ressort, qui agit à l'encontre d'un coulissement de l'élément de dossier (20) et de l'élément d'assise (18), dans lequel le au moins un ressort est accouplé ou relié à l'élément de dossier (20), à l'élément d'assise (18) et/ou à l'élément de déplacement (26).

7. Siège selon l'une quelconque des revendications 1 à 5,
dans lequel le au moins un dispositif d'amortissement présente un frein à disques multiples, qui est accouplé ou relié à l'élément de dossier (20), à l'élément d'assise (18) et/ou à l'élément de déplacement (26).
